# FASCICULE DE BREVET EUROPEEN

(11) **EP 1 907 795 B1**
(45) Date de publication et mention de la délivrance du brevet: **16.03.2011**
(21) Numéro de dépôt: 06794172.4
(22) Date de dépôt: 13.07.2006
(51) Int. Cl.: G01C 23/00

(54) **SYSTEME DE VISUALISATION D'AEROPORT POUR UN AERONEF**
FLUGHAFENERKENNUNGSSYSTEM FÜR EIN FLUGZEUG
AIRPORT VIEWING SYSTEM FOR AN AIRCRAFT

(30) Priorité: 22.07.2005 FR 0507802
(43) Date de publication de la demande: 09.04.2008
(73) Titulaire: AIRBUS OPERATIONS (SAS), 31060 Toulouse (FR)
(72) Inventeur: FETZMANN, Fabien, 31270 Cugnaux (FR); COLDEFY, Pierre, F-31300 Toulouse (FR); MALAVAL, Thierry, 31200 Toulouse (FR)
(74) Mandataire: Hauer, Bernard
(86) Numéro de dépôt international: PCT/FR2006/001713
(87) Numéro de publication internationale: WO 2007/010121

(56) Documents cités:
- EP-A- 1 347 412
- WO-A-03/071228
- WO-A-2005/033631
- US-A- 6 112 141
- SCHIEFELE J ET AL: "Human factors flight trial analysis for 2d situation awareness and 3d synthetic vision displays" 22ND. DASC. THE 22ND. DIGITAL AVIONICS SYSTEMS CONFERENCE PROCEEDINGS. INDIANAPOLIS, IN, OCT. 12 - 16, 2003, DIGITAL AVIONICS SYSTEMS CONFERENCE, NEW YORK, NY : IEEE, US, vol. VOL. 2 OF 2. CONF. 9, 12 octobre 2003 (2003-10-12), pages 9C11-9C114, XP010668921 ISBN: 0-7803-7844-X
- KAMINENI S ET AL: "Electronic moving map of airport surface on electronic flight bag" DIGITAL AVIONICS SYSTEMS CONFERENCE, 2004. DASC 04. THE 23RD SALT LAKE CITY, UT, USA 24-28 OCT. 2004, PISCATAWAY, NJ, USA,IEEE, US, vol. 1, 24 octobre 2004 (2004-10-24), pages 4C3-41, XP010764988 ISBN: 0-7803-8539-X

## Description

La présente invention concerne un système de visualisation d'aéroport qui est embarqué sur un aéronef, en particulier un avion de transport.

Bien que non exclusivement, un tel système de visualisation d'aéroport est plus particulièrement destiné à aider à la navigation au sol d'un avion sur un aéroport, dans le cadre d'une fonction de navigation aéroportuaire. On sait qu'une telle fonction de navigation aéroportuaire permet notamment d'afficher sur un écran du poste de pilotage de l'avion une carte d'aéroport sur laquelle est notamment indiquée la position courante dudit avion.

Généralement, un tel système de visualisation d'aéroport comporte au moins :
- un premier moyen pour déterminer la position courante de l'avion ;
- une mémoire pour enregistrer au moins une carte d'aéroport ;
- un dispositif d'affichage qui est susceptible de présenter, sur au moins un écran de visualisation, au moins partiellement une carte d'aéroport, à laquelle est susceptible d'être associé un symbole illustrant ladite position courante de l'avion ; et
- un moyen d'interface permettant à un opérateur d'agir sur l'affichage mis en oeuvre par ledit dispositif d'affichage.

Un tel système de visualisation d'aéroport présente quelques inconvénients.

En premier lieu, la mémoire dudit système n'est pas en mesure d'enregistrer toutes les cartes des différents aéroports qui sont susceptibles d'intéresser le pilote (ou plus généralement l'équipage de l'avion) au cours d'un vol. En effet, on sait qu'au cours d'un même vol, l'équipage est généralement amené à visualiser différents aéroports, et notamment les aéroports de départ et de destination, ainsi qu'éventuellement un aéroport de déroutement ou tout autre aéroport, pour lequel l'équipage aurait besoin d'informations.

En second lieu, l'équipage doit sélectionner à chaque fois, de façon manuelle, à l'aide dudit moyen d'interface, la carte qui est appropriée à la situation courante. Une telle sélection manuelle présente une charge de travail importante, puisqu'en fonction de la phase de vol, et notamment à l'approche d'un nouvel aéroport, l'équipage doit à chaque fois sélectionner la carte d'aéroport appropriée. De plus, comme ledit système de visualisation d'aéroport ne peut présenter qu'une seule carte d'aéroport à la fois, lorsque l'équipage a besoin d'informations sur un autre aéroport que celui qui correspond à la situation courante et qui est visualisé, il est obligé de remplacer cette carte d'aéroport visualisée par la nouvelle carte qui l'intéresse, de sorte qu'il perd ainsi les informations concernant l'aéroport associé à la position courante de l'aéronef.

Par ailleurs, on connaît :
- par le document WO-03/071228, un système de visualisation d'aéroport pour un aéronef. Ce système de visualisation affiche une carte d'aéroport en fonction de la position courante de l'aéronef et d'une information de localisation de l'aéroport. Il prévoit deux modes d'affichage différents, à savoir un mode statique, pour lequel la carte est fixe et le symbole de l'aéronef est mobile, et un mode dynamique, pour lequel la carte est mobile et le symbole de l'aéronef est fixe ;
- par le document US-6 112 141, un système d'affichage de carte d'aéroport sur un aéronef. Ce système prévoit, notamment, des modes arc et rose et des moyens d'affichage automatique de la carte ;
- par le document WO-2005/033631, un système de navigation pour un aéronef. Ce système comporte des moyens pour réaliser, automatiquement ou manuellement, la sélection d'une carte d'aéroport à afficher ; et
- par un article de Schiefele et al, intitulé « Human factors flight trial analysis for 2D situation awareness and 3D synthetic vision displays » et publié par IEEE, 12 octobre 2003, pages 9C1.1-9c1.14, un système d'affichage susceptible d'afficher une carte d'aéroport pourvue d'un symbole illustrant la position de l'aéronef.

La présente invention concerne un système de visualisation d'aéroport qui est embarqué sur un aéronef, en particulier un avion de transport, et qui permet de remédier aux inconvénients précités.

A cet effet, selon l'invention, ledit système du type comportant :
- un premier moyen pour déterminer la position courante de l'aéronef ;
- une mémoire pour enregistrer au moins une carte d'aéroport ;
- un dispositif d'affichage qui est susceptible de présenter, sur au moins un écran de visualisation, au moins partiellement une carte d'aéroport, à laquelle est susceptible d'être associé un symbole illustrant ladite position courante de l'aéronef ; et
- un moyen d'interface permettant à un opérateur d'agir sur l'affichage mis en oeuvre par ledit dispositif d'affichage,
   est remarquable en ce qu'il comporte de plus :
- au moins un moyen de stockage susceptible de stocker une pluralité de cartes d'aéroport ;
- un second moyen associé audit moyen de stockage et permettant de déterminer un point de référence pour chaque aéroport, dont la carte est stockée dans ledit moyen de stockage ; et
- un dispositif de sélection permettant de sélectionner une carte d'aéroport stockée dans ledit moyen de stockage de manière à la transmettre audit dispositif d'affichage pour qu'il puisse l'afficher, ledit dispositif de sélection comportant au moins des moyens de sélection automatique permettant de sélectionner automatiquement une carte d'aéroport à afficher, en fonction de la position courante de l'aéronef et d'au moins un point de référence d'aéroport.

Ainsi, grâce à l'invention, le système de visualisation d'aéroport peut prendre en compte (dans le moyen de stockage) l'ensemble des cartes d'aéroport qui sont disponibles et qui pourraient être utiles à l'équipage lors d'un vol.

En outre, ledit dispositif de sélection réalise une sélection automatique de l'aéroport le plus approprié à la situation courante, comme précisé ci-dessous. Ainsi, l'équipage dispose, sans aucune action de sa part, de la carte d'aéroport qui est adaptée à la position courante de l'aéronef et donc à la phase de vol courante.

Dans un mode de réalisation particulier, ledit dispositif d'affichage est formé de manière à pouvoir afficher un mode d'affichage d'un premier type, pour lequel ledit symbole illustrant ladite position courante de l'aéronef est fixe sur l'écran de visualisation et ladite carte d'aéroport est mobile, et lesdits moyens de sélection automatique comportent un premier élément qui sélectionne automatiquement une carte d'aéroport, en fonction de la position courante de l'aéronef et d'au moins un volume de couverture qui est défini autour d'un point de référence d'aéroport. Plus précisément, ledit dispositif d'affichage est formé de manière à pouvoir afficher, comme mode d'affichage du premier type :
- un mode dit "arc", pour lequel ledit symbole fixe est situé au bas de l'écran de visualisation et plusieurs arcs de cercle sont centrés par rapport audit symbole ; ou
- un mode dit "rose", pour lequel ledit symbole fixe est situé au centre de l'écran de visualisation et plusieurs cercles sont centrés sur ce symbole.

Avantageusement, ledit premier élément (desdits moyens de sélection automatique) est formé de manière à optimiser ledit volume de couverture, en fonction de l'échelle maximale du dispositif d'affichage et de la proximité des aéroports. Ainsi, le système conforme à l'invention réalise (automatiquement) la sélection d'une carte d'aéroport, au moment où celle-ci peut être visualisée conformément à l'échelle maximale du dispositif d'affichage, tout en évitant les situations où les volumes de couverture se recouvrent mutuellement.

En outre, dans un mode de réalisation particulier, ledit dispositif d'affichage est formé de manière à pouvoir afficher un mode d'affichage d'un second type, dit mode "plan", pour lequel la carte d'aéroport est fixe sur l'écran de visualisation et le symbole illustrant la position courante de l'aéronef est mobile, et lesdits moyens de sélection automatique comportent un second élément qui sélectionne automatiquement une carte d'aéroport, en fonction d'une distance courante entre la position courante de l'aéronef et un point de référence d'aéroport, distance courante qui est comparée à au moins une distance prédéterminée. Dans ce cas, lorsque l'aéronef a quitté un aéroport d'origine, ledit second élément (desdits moyens de sélection automatique) :
- détermine la distance courante entre la position courante de l'aéronef et le point de référence dudit aéroport d'origine ;
- compare cette distance courante à une première distance prédéterminée ; et
- sélectionne automatiquement comme carte d'aéroport :
   ■ celle dudit aéroport d'origine, tant que ladite distance courante reste inférieure ou égale à ladite première distance ; et
   ■ celle d'un aéroport de destination, dès que ladite distance courante devient supérieure à ladite première distance.

En outre, de façon avantageuse, lorsque l'aéronef s'approche d'un aéroport de destination, ledit second élément (desdits moyens de sélection automatique) :
- détermine la distance courante entre la position courante de l'aéronef et le point de référence dudit aéroport de destination ;
- compare cette distance courante à une seconde distance prédéterminée ; et
- sélectionne automatiquement comme carte d'aéroport :
   ■ celle de l'aéroport qui est initialement sélectionnée, tant que ladite distance courante reste supérieure ou égale à ladite seconde distance ; et
   ■ celle dudit aéroport de destination, dès que ladite distance courante devient inférieure à ladite seconde distance.

Bien entendu, pour que le pilote puisse rester maître de l'affichage et puisse toujours imposer l'affichage d'une carte d'aéroport qui l'intéresse, ledit dispositif de sélection comporte également des moyens de sélection manuelle permettant à un opérateur de sélectionner manuellement une carte d'aéroport.

Ainsi, l'équipage conserve la possibilité de sélectionner à tout moment la carte d'aéroport qui l'intéresse. De plus, la sélection manuelle réalisée par un membre d'équipage reste prioritaire. Toutefois, lorsqu'un membre d'équipage sélectionne à l'aide desdits moyens de sélection manuelle un aéroport qui est différent de l'aéroport de destination qui a été sélectionné préalablement par lesdits moyens de sélection automatique, des moyens appropriés qui font partie du système conforme à l'invention sont activés pour indiquer cette incohérence de sélection.

Dans un mode de réalisation particulier, lesdites cartes d'aéroport sont stockées dans ledit moyen de stockage selon au moins une liste ordonnée, et lesdits moyens de sélection manuelle comportent au moins un premier élément permettant à un opérateur, pour réaliser la sélection, de choisir l'une desdites cartes d'aéroport dans ladite liste ordonnée.

En outre, dans un autre mode de réalisation, lesdites cartes d'aéroport qui sont stockées dans ledit moyen de stockage sont associées respectivement à des caractéristiques de désignation particulières, et lesdits moyens de sélection manuelle comportent au moins un second élément permettant à un opérateur, pour réaliser la sélection, de saisir des caractères alphanumériques permettant de former l'une desdites caractéristiques de désignation associées auxdites cartes d'aéroport.

Par ailleurs, avantageusement, lesdits moyens de sélection manuelle sont formés de manière à rester actifs lorsque ledit dispositif d'affichage affiche un mode d'affichage d'un premier type (un mode arc ou un mode rose), pour lequel le symbole illustrant ladite position courante de l'aéronef est fixe sur l'écran de visualisation et la carte d'aéroport est mobile. Ainsi, l'équipage conserve la capacité de consulter, en mode arc ou en mode rose, les informations sur les différents aéroports -disponibles, autres que celui affiché, puisque dans ces modes le système affiche une carte d'aéroport dépendant de la position de l'aéronef par rapport au volume de couverture de chaque aéroport.

Par ailleurs, dans un mode de réalisation particulier, le système de visualisation d'aéroport conforme à l'invention comporte des moyens de liaison permettant de le relier à un système de gestion de vol, de préférence de type FMS ("Flight Management System" en anglais), et lesdits moyens de sélection manuelle comportent au moins un troisième élément pour sélectionner et récupérer dudit système de gestion de vol des données relatives à des aéroports, de manière à apporter une aide à la sélection de cartes d'aéroport.

Dans le cadre de la présente invention, la sélection d'une carte d'aéroport ne correspond pas à l'affichage de cette carte d'aéroport sur le dispositif d'affichage, mais à la transmission de cette carte d'aéroport audit dispositif d'affichage de manière à ce qu'il puisse l'afficher (immédiatement ou ultérieurement) dès qu'un tel affichage est requis.

Pour ce faire, le système de visualisation d'aéroport conforme à l'invention comporte, de plus, des moyens de commande d'affichage qui commandent l'affichage, sur l'écran de visualisation du dispositif d'affichage, d'une carte d'aéroport qui a été préalablement sélectionnée (ou d'informations relatives à une carte d'aéroport qui a été préalablement sélectionnée).

Avantageusement, lesdits moyens de commande d'affichage comportent :
- au moins un moyen manuel ; et/ou
- au moins un moyen commandant automatiquement l'affichage, et ceci lors d'un changement de mode d'affichage (arc, rose, plan) du dispositif d'affichage.

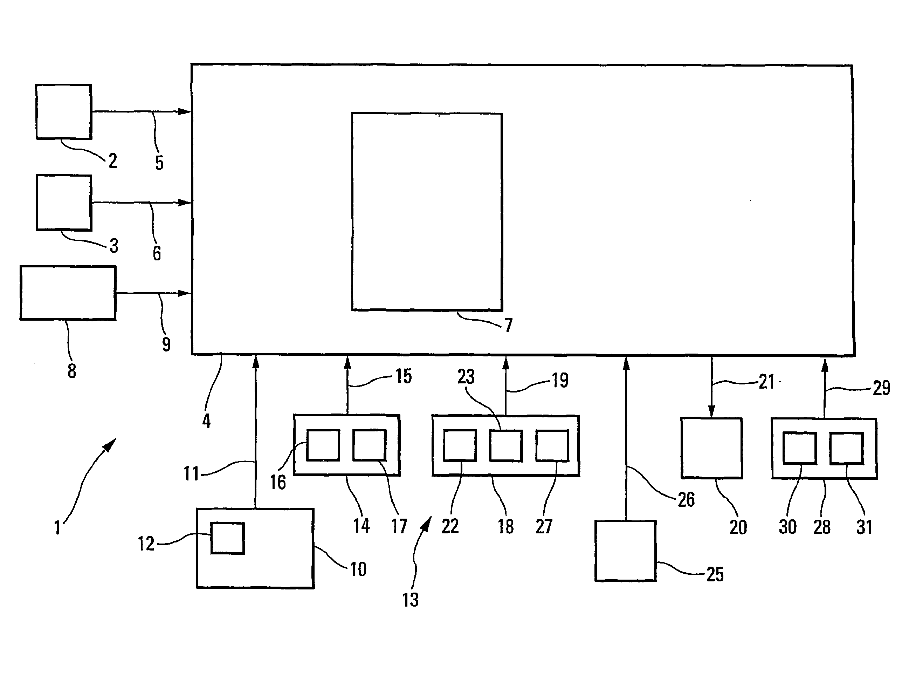

L'unique figure du dessin annexé fera bien comprendre comment l'invention peut être réalisée. Cette figure unique est le schéma synoptique d'un système de visualisation d'aéroport conforme à l'invention.

Le système 1 conforme à l'invention et représenté schématiquement sur la figure, est embarqué sur un aéronef non représenté, par exemple un avion de transport, et est destiné à visualiser au moins une partie d'un aéroport. Bien que non exclusivement, un tel système de visualisation d'aéroport 1 est plus particulièrement destiné à aider à la navigation au sol d'un avion sur un aéroport, dans le cadre d'une fonction de navigation aéroportuaire. On sait qu'une telle fonction de navigation aéroportuaire permet notamment d'afficher sur un écran du poste de pilotage de l'avion une carte d'aéroport sur laquelle est en particulier indiquée la position courante dudit avion.

Ledit système 1 est du type usuel, comportant :
- un moyen 2 usuel, pour déterminer la position géographique courante de l'aéronef, en vol ou au sol ;
- une mémoire 3 usuelle, pour enregistrer au moins une carte d'aéroport. En général, cette mémoire 3 qui présente une capacité limitée enregistre essentiellement les aéroports concernés par le vol en cours, à savoir notamment les aéroports d'origine et de destination ;
- un dispositif d'affichage 4 qui est relié par l'intermédiaire de liaisons 5 et 6 audit moyen 2 et à ladite mémoire 3, et qui est susceptible de présenter sur au moins un écran de visualisation 7, au moins partiellement une carte d'aéroport, et sur cette carte d'aéroport, un symbole illustrant l'aéronef et situé sur ladite carte d'aéronef en conformité avec la position effective courante dudit aéronef sur ou par rapport audit aéroport ; et
- un moyen d'interface usuel 8, qui est relié par l'intermédiaire d'une liaison 9 audit dispositif d'affichage 4, qui comporte par exemple un clavier et/ou une souris d'ordinateur (non représentés), et qui permet à un opérateur, en particulier un membre d'équipage, d'agir sur l'affichage mis en oeuvre par ledit dispositif d'affichage 4. A l'aide dudit moyen d'interface 8, un opérateur peut notamment modifier l'échelle de l'affichage, modifier le mode d'affichage, et déplacer la carte d'aéroport affichée.

Selon l'invention, ledit système 1 comporte de plus :
- au moins un moyen de stockage 10 qui est relié par l'intermédiaire d'une liaison 11 audit dispositif d'affichage 4 et qui est en mesure de stocker une pluralité de cartes d'aéroport. Ce moyen de stockage 10 peut, en particulier, comprendre un ou plusieurs éléments de stockage qui sont intégrés dans des systèmes usuels de l'aéronef ;
- un moyen 12 associé audit moyen de stockage 10 et permettant de déterminer pour chaque aéroport, dont la carte est stockée dans ledit moyen de stockage 10, un point de référence qui sera pris en compte de la manière précisée ci-dessous ; et
- un dispositif de sélection 13 qui permet de sélectionner une carte d'aéroport qui est stockée dans ledit moyen de stockage 10 de manière à la transmettre audit dispositif d'affichage 4 pour qu'il puisse l'afficher. Dans le cadre de la présente invention, la sélection d'une carte d'aéroport ne signifie pas l'affichage de cette carte d'aéroport sur l'écran de visualisation 7, mais la transmission de cette carte d'aéroport audit dispositif d'affichage 4 de manière à ce qu'il puisse l'afficher si un tel affichage est requis (ultérieurement ou simultanément).

Selon l'invention, ledit dispositif de sélection 13 comporte au moins des moyens de sélection automatique 14 qui sont reliés par une liaison 15 audit dispositif d'affichage 4 et qui sont formés de manière à sélectionner automatiquement une carte d'aéroport à afficher, et ceci en fonction de la position courante de l'aéronef et d'au moins un point de référence d'aéroport, comme précisé ci-dessous.

Ainsi, grâce à l'invention, le système de visualisation d'aéroport 1 peut prendre en compte (dans le moyen de stockage 10) l'ensemble des cartes d'aéroport qui sont disponibles et qui pourraient être utiles à l'équipage lors d'un vol.

En outre, ledit dispositif de sélection 13 permet de réaliser (à l'aide des moyens 14) une sélection automatique de l'aéroport le plus approprié à la situation courante, comme précisé ci-dessous. Ainsi, l'équipage dispose, sans aucune action de sa part, de la carte d'aéroport qui est adaptée à la position courante de l'aéronef et donc à la phase de vol courante.

Ledit dispositif d'affichage 4 est formé de manière à pouvoir afficher un mode d'affichage d'un premier type, pour lequel ledit symbole illustrant la position courante de l'aéronef est fixe sur l'écran de visualisation 7 alors que ladite carte d'aéroport est mobile sur cet écran de visualisation 7. Plus précisément, le dispositif d'affichage 4 est formé de manière à pouvoir afficher, comme mode d'affichage du premier type :
- un mode dit "arc", pour lequel ledit symbole fixe est situé au bas de l'écran de visualisation 7 et plusieurs arcs de cercle sont centrés par rapport audit symbole ; ou
- un mode dit "rose", pour lequel ledit symbole fixe est situé au centre de l'écran de visualisation 7 et plusieurs cercles sont centrés sur ce symbole.

Dans ce cas, lesdits moyens de sélection automatique 14 comportent un élément 16 qui sélectionne automatiquement une carte d'aéroport, en fonction de la position courante de l'aéronef, et d'au moins un volume de couverture ("Coverage Volume" en anglais) qui est défini, de façon usuelle, autour du point de référence d'aéroport ("Aerodrom Reference Point" en anglais) correspondant.

Ainsi, par une comparaison entre la position courante de l'aéronef et le volume de couverture qui est définie pour chaque aéroport, l'élément 16 détermine l'aéroport à sélectionner. De cette manière, dès que le pilote choisit un mode d'affichage qui est centré sur l'aéronef, c'est-à-dire un mode du premier type précité (mode arc ou mode rose), la carte de cet aéroport est automatiquement sélectionnée, si l'aéronef se trouve dans le volume de couverture correspondant.

En outre, ledit élément 16 (desdits moyens de sélection automatique 14) est formé de manière à optimiser ledit volume de couverture, en fonction de l'échelle maximale du dispositif d'affichage 4 et de la proximité des différents aéroports. Ainsi, le système 1 conforme à l'invention réalise automatiquement la sélection d'une carte d'aéroport, au moment où celle-ci peut être visualisée conformément à l'échelle maximale du dispositif d'affichage 4, tout en évitant les situations où les volumes de couverture se recouvrent mutuellement.

En outre, dans un mode de réalisation particulier, ledit dispositif d'affichage 4 est formé de manière à pouvoir afficher un mode d'affichage d'un second type, dit mode "plan", pour lequel la carte d'aéroport est fixe sur l'écran de visualisation 7 et le symbole illustrant la position courante de l'aéronef est mobile sur cet écran de visualisation 7. En mode plan, l'affichage n'est donc plus centré sur la position courante de l'aéronef de sorte que le pilote peut :
- déplacer librement la carte d'aéronef affichée ;
- demander l'affichage d'une autre carte d'aéroport et la déplacer librement pour consulter les informations qu'elle contient.

Selon l'invention, dans ce cas, lesdits moyens de sélection automatique 14 comportent un élément 17 qui sélectionne automatiquement une carte d'aéroport, en fonction d'une distance courante entre la position courante de l'aéronef et un point de référence d'aéroport, distance courante qui est ensuite comparée à au moins une distance prédéterminée, comme précisé ci-dessous.

Dans ce cas, lorsque l'aéronef a quitté un aéroport d'origine, ledit élément 17 (desdits moyens de sélection automatique 14) réalise, de façon répétitive et automatique, la suite d'opérations suivantes :
- il détermine la distance courante Dc1 entre la position courante de l'aéronef et le point de référence dudit aéroport d'origine ;
- il compare cette distance courante Dc1 à une distance prédéterminée D1, par exemple 50 NM (environ 92 kilomètres) ; et
- il sélectionne, automatiquement, comme carte d'aéroport :
   ■ celle dudit aéroport d'origine, tant que ladite distance courante Dc1 reste inférieure ou égale à ladite distance D1 ; et
   ■ celle de l'aéroport de destination, dès que ladite distance courante Dc1 devient supérieure à ladite distance D1, c'est-à-dire dès que l'aéronef est suffisamment éloigné dudit aéroport d'origine.

En outre, lorsque l'aéronef s'approche d'un aéroport de destination, ledit élément 17 (desdits moyens de sélection automatique 14) réalise, de façon répétitive et automatique, la suite d'opérations suivantes :
- il détermine la distance courante Dc2 entre la position courante de l'aéronef et le point de référence dudit aéroport de destination ;
- il compare cette distance courante Dc2 à une distance D2 prédéterminée, par exemple 50 NM (environ 92 kilomètres) ; et
- il sélectionne, automatiquement, comme carte d'aéroport :
   ■ celle de l'aéroport qui est initialement sélectionnée, tant que ladite distance courante Dc2 reste supérieure ou égale à ladite distance D2 ; et
   ■ celle dudit aéroport de destination, dès que ladite distance courante Dc2 devient inférieure à ladite distance D2, c'est-à-dire dès que l'aéronef est proche dudit aéroport de destination.

Les distances D1 et D2 peuvent également être exprimées en fonction des phases de vol de l'aéronef.

Bien entendu, pour que le pilote puisse rester maître de l'affichage et puisse toujours imposer l'affichage d'une carte d'aéroport qui l'intéresse, ledit dispositif de sélection 13 comporte également des moyens de sélection manuelle 18 permettant à un opérateur de sélectionner manuellement une carte d'aéroport.

Ainsi, l'équipage conserve la possibilité de sélectionner à tout moment la carte d'aéroport qui l'intéresse, à l'aide desdits moyens de sélection manuelle 18. De plus, la sélection manuelle réalisée par un membre d'équipage reste prioritaire par rapport à une sélection automatique réalisée par lesdits moyens de sélection automatique 14. Toutefois, en cas d'incohérence entre une sélection manuelle réalisée à l'aide desdits moyens de sélection manuelle 18 et une sélection automatique réalisée précédemment par lesdits moyens de sélection automatique 14, en particulier lors de l'approche d'un aéroport de destination, le système 1 conforme à l'invention indique cette incohérence à l'équipage, à l'aide d'un moyen d'avertissement 20 qui est relié par l'intermédiaire d'une liaison 21 audit dispositif d'affichage 4. L'indication formée par ce moyen d'avertissement 20 peut être une indication de type sonore et/ou de type visuel. Ce moyen d'avertissement 20 est en particulier avantageux lorsqu'apparaît, en phase d'approche, une incohérence entre un aéroport actuellement affiché en mode plan et l'aéroport de destination, car en phase d'approche, il est généralement déconseillé de se trouver en mode plan et de surcroît, en visualisant un aéroport différent de celui sur lequel on s'apprête à atterrir. Bien entendu, les indications fournies par le moyen d'avertissement 20 sont émises dès qu'une incohérence est détectée.

Dans un mode de réalisation particulier, lesdites cartes d'aéroport sont stockées dans ledit moyen de stockage 10 selon au moins une liste ordonnée, alphabétiquement et numériquement. Comme un même aéroport peut, en général, être désigné suivant au moins trois appellations usuelles différentes (nom complet, code OACI, code IATA), lesdits moyens de sélection manuelle 18 disposent de différents classements pour réaliser la sélection de cette liste, à savoir :
- un classement par nom complet de l'aéroport ;
- un classement par code OACI (pour "Organisation de l'Aviation Civile Internationale") ; et
- un classement par code IATA (Pour "International Air Transport Association" en anglais, à savoir association de transport aérien international).

A cet effet, lesdits moyens de sélection manuelle 18 comportent un élément 22 permettant à un opérateur, notamment à un membre d'équipage, pour réaliser la sélection, de choisir l'une desdites cartes d'aéroport dans ladite liste ordonnée précitée. L'équipage de l'aéronef a donc la possibilité de choisir à tout moment l'un des trois classements précités qui est alors affiché sur un écran par exemple. L'élément 22, par exemple une souris d'ordinateur, permet ensuite de se déplacer dans le classement choisi et affiché, afin de sélectionner une carte d'aéroport.

En outre, dans un autre mode de réalisation, lesdites cartes d'aéroport qui sont stockées dans ledit moyen de stockage 10 sont associées respectivement à des caractéristiques de désignation particulières, et lesdits moyens de sélection manuelle 18 comportent au moins un élément 23, par exemple un clavier, permettant à un opérateur, pour réaliser la sélection, de saisir des caractères alphanumériques de manière à former l'une desdites caractéristiques de désignation associées à une carte d'aéroport.

Par ailleurs, lesdits moyens de sélection manuelle 18 sont formés de manière à rester actifs, lorsque ledit dispositif d'affichage 4 affiche un mode d'affichage du premier type précité (un mode arc ou un mode rose), pour lequel le symbole illustrant ladite position courante de l'aéronef est fixe sur l'écran de visualisation 7 et la carte d'aéroport est mobile. Ainsi, l'équipage conserve la capacité, en mode arc ou en mode rose, de consulter les informations sur les divers aéroports disponibles, autres que celui affiché, puisque dans ces modes (arc ou rose) le système 1 affiche une carte d'aéroport dépendant de la position de l'aéronef par rapport au volume de couverture de chaque aéroport.

Cela permet de consulter les informations sur différents aéroports sans enlever ou modifier la carte que l'on visualise. De manière à fournir un retour d'information cohérent, les informations relatives à un aéroport sélectionné dans la liste précitée sont, par exemple, affichées sur l'écran de visualisation 7 :
- en jaune, si cet aéroport n'est pas celui qui est actuellement affiché ; et
- en vert, si cet aéroport est l'aéroport effectivement affiché à l'instant courant.

Par ailleurs, dans un mode de réalisation particulier, ledit système de visualisation d'aéroport 1 conforme à l'invention comporte, de plus, des moyens de liaison 26 permettant de le relier à un système de gestion de vol 25, de préférence de type FMS ("Flight Management System" en anglais). Ledit système de gestion de vol 25 ne comporte pas de carte d'aéroport, mais une base de données de points géographiques, dont certains matérialisent la position des aéroports. En programmant le plan de vol, le pilote choisit les points géographiques correspondant à l'aéroport de départ et à l'aéroport de destination. Le système 1 conforme à l'invention récupère, via les moyens de liaison 26, ces informations dudit système de gestion de vol 25. De plus, ledit système 1 comporte un élément 27 (faisant partie des moyens de sélection manuelle 18) qui apporte des raccourcis pour charger les cartes d'aéroport correspondantes.

Comme indiqué précédemment, la sélection d'une carte d'aéroport à l'aide du dispositif de sélection 13 ne signifie pas que cette carte d'aéroport est affichée sur l'écran de visualisation 7, mais cela signifie que cette carte d'aéroport est transmise audit dispositif d'affichage 4 de manière à ce qu'il puisse l'afficher lorsqu'un ordre correspondant lui est donné.

Aussi, pour ce faire, le système de visualisation d'aéroport 1 conforme à l'invention comporte, de plus, des moyens de commande d'affichage 28 qui commandent l'affichage, sur l'écran de visualisation 7 du dispositif d'affichage 4, d'une carte d'aéroport qui a été préalablement sélectionnée (ou d'informations relatives à une carte d'aéroport qui a été préalablement sélectionnée).

Dans un mode de réalisation particulier, lesdits moyens de commande d'affichage 28 qui sont reliés par l'intermédiaire d'une liaison 29 audit dispositif d'affichage 4, comportent :
- au moins un moyen manuel 30, par exemple un bouton poussoir ; et/ou
- au moins un moyen 31 commandant automatiquement l'affichage, et ceci de préférence lors d'un changement de mode d'affichage (arc, rose, plan) du dispositif d'affichage 4.

## Revendications

1. Système de visualisation d'aéroport qui est embarqué sur un aéronef, ledit système (1) comportant :
- un premier moyen (2) pour déterminer la position courante de l'aéronef ;
- une mémoire (3) pour enregistrer au moins une carte d'aéroport ;
- un dispositif d'affichage (4) qui est susceptible de présenter, sur au moins un écran de visualisation (7), au moins partiellement une carte d'aéroport, à laquelle est susceptible d'être associé un symbole illustrant ladite position courante de l'aéronef, ledit dispositif d'affichage (4) étant formé de manière à pouvoir afficher un mode d'affichage d'un premier type, pour lequel ledit symbole illustrant ladite position courante de l'aéronef est fixe sur l'écran de visualisation (7) et ladite carte d'aéroport est mobile ;
- un moyen d'interface (8) permettant à un opérateur d'agir sur l'affichage mis en oeuvre par ledit dispositif d'affichage (4) ;
- au moins un moyen de stockage (10) susceptible de stocker une pluralité de cartes d'aéroport ; et
- un dispositif de sélection (13) permettant de sélectionner une carte d'aéroport stockée dans ledit moyen de stockage (10) de manière à la transmettre audit dispositif d'affichage (4) pour qu'il puisse l'afficher, ledit dispositif de sélection (13) comportant au moins des moyens de sélection automatique (14) permettant de sélectionner automatiquement une carte d'aéroport à afficher, en fonction au moins de la position courante de l'aéronef,
**caractérisé en ce que** :
- ledit système (1) comporte, de plus, un second moyen (12) associé audit moyen de stockage (10) et permettant de déterminer un point de référence pour chaque aéroport, dont la carte est stockée dans ledit moyen de stockage (10), ainsi qu'un volume de couverture qui est défini autour dudit point de référence ;
- lesdits moyens de sélection automatique (14) comportent un premier élément (16) qui sélectionne automatiquement une carte d'aéroport, en fonction de la position courante de l'aéronef et du volume de couverture d'un aéroport ; et
- ledit premier élément (16) des moyens de sélection automatique (14) est formé de manière à optimiser ledit volume de couverture, en fonction de l'échelle maximale du dispositif d'affichage (4) et de la proximité des aéroports, de sorte que ledit système (1) puisse réaliser automatiquement la sélection d'une carte d'aéroport, au moment où celle-ci peut être visualisée conformément à l'échelle maximale du dispositif d'affichage (4), tout en évitant des situations où des volumes de couverture se recouvrent mutuellement.

2. Système selon la revendication 1,
**caractérisé en ce que** ledit dispositif de sélection (13) comporte, de plus, des moyens de sélection manuelle (18) permettant à un opérateur de sélectionner manuellement une carte d'aéroport, **en ce qu'**une sélection manuelle réalisée par lesdits moyens de sélection manuelle (18) est prioritaire par rapport à une sélection automatique réalisée par lesdits moyens de sélection automatique (14), et **en ce que** ledit système (1) comporte, de plus, des moyens (20) pour indiquer à un opérateur une incohérence, lorsque ce dernier sélectionne à l'aide desdits moyens de sélection manuelle (18) un aéroport qui est différent de l'aéroport de destination qui a été sélectionné préalablement par lesdits moyens de sélection automatique (14).

3. Système selon l'une quelconque des revendications précédentes, **caractérisé en ce que** ledit dispositif d'affichage (4) est formé de manière à pouvoir afficher un mode d'affichage d'un second type, dit mode plan, pour lequel la carte d'aéroport est fixe sur l'écran de visualisation (7) et le symbole illustrant la position courante de l'aéronef est mobile, et **en ce que** lesdits moyens de sélection automatique (14) comportent un second élément (17) qui sélectionne automatiquement une carte d'aéroport, en fonction d'une distance courante entre la position courante de l'aéronef et un point de référence d'aéroport, distance courante qui est comparée à au moins une distance prédéterminée.

4. Système selon la revendication 3,
**caractérisé en ce que**, lorsque l'aéronef a quitté un aéroport d'origine, ledit second élément (17) :
- détermine la distance courante entre la position courante de l'aéronef et le point de référence dudit aéroport d'origine ;
- compare cette distance courante à une première distance prédéterminée ; et
- sélectionne automatiquement comme carte d'aéroport :
• celle dudit aéroport d'origine, tant que ladite distance courante reste inférieure ou égale à ladite première distance ; et
• celle d'un aéroport de destination, dès que ladite distance courante devient supérieure à ladite première distance.

5. Système selon l'une des revendications 3 et 4, **caractérisé en ce que**, lorsque l'aéronef s'approche d'un aéroport de destination, ledit second élément (17) :
- détermine la distance courante entre la position courante de l'aéronef et le point de référence dudit aéroport de destination ;
- compare cette distance courante à une seconde distance prédéterminée ; et
- sélectionne automatiquement comme carte d'aéroport :
• celle de l'aéroport qui est initialement sélectionnée, tant que ladite distance courante reste supérieure ou égale à ladite seconde distance ; et
• celle dudit aéroport de destination, dès que ladite distance courante devient inférieure à ladite seconde distance.

6. Système selon l'une quelconque des revendications précédentes,
**caractérisé en ce que** lesdites cartes d'aéroport sont stockées dans ledit moyen de stockage (10) selon au moins une liste ordonnée, et **en ce que** lesdits moyens de sélection manuelle (18) comportent au moins un premier élément (22) permettant à un opérateur, pour réaliser la sélection, de choisir l'une desdites cartes d'aéroport dans ladite liste ordonnée.

7. Système selon l'une quelconque des revendications précédentes,
**caractérisé en ce que** lesdites cartes d'aéroport qui sont stockées dans ledit moyen de stockage (10) sont associées respectivement à des caractéristiques de désignation particulières, et **en ce que** lesdits moyens de sélection manuelle (18) comportent au moins un second élément (23) permettant à un opérateur, pour réaliser la sélection, de saisir des caractères alphanumériques permettant de former l'une desdites caractéristiques de désignation associées auxdites cartes d'aéroport.

8. Système selon l'une quelconque des revendications précédentes,
**caractérisé en ce que** lesdits moyens de sélection manuelle (18) sont formés de manière à rester actifs lorsque ledit dispositif d'affichage (4) affiche un mode d'affichage d'un premier type, pour lequel le symbole illustrant ladite position courante de l'aéronef est fixe sur l'écran de visualisation (7) et la carte d'aéroport est mobile.

9. Système selon l'une quelconque des revendications précédentes,
**caractérisé en ce qu'**il comporte, de plus, des moyens de liaison (26) permettant de relier ledit système (1) à un système de gestion de vol (25) et **en ce que** lesdits moyens de sélection manuelle (18) comportent au moins un troisième élément (27) pour sélectionner et récupérer dudit système de gestion de vol (25) des données relatives à des aéroports.

10. Système selon l'une quelconque des revendications précédentes,
**caractérisé en ce qu'**il comporte, de plus, des moyens de commande d'affichage (28) qui commandent l'affichage, sur l'écran de visualisation (7) du dispositif d'affichage (4), directement d'une carte d'aéroport préalablement sélectionnée ou d'informations relatives à une carte d'aéroport préalablement sélectionnée.

11. Système selon la revendication 10,
**caractérisé en ce que** lesdits moyens de commande d'affichage (28) comportent au moins un moyen manuel (30).

12. Système selon la revendication 10,
**caractérisé en ce que** lesdits moyens de commande d'affichage (28) comportent au moins un moyen (31) commandant automatiquement l'affichage lors d'un changement de mode d'affichage du dispositif d'affichage (4).

13. Aéronef,
**caractérisé en ce qu'**il comporte un système de visualisation d'aéroport (1) tel que celui spécifié sous l'une quelconque des revendications 1 à 12.

## Claims

1. An airport viewing system which is installed in an aircraft, said system (1) comprising:
- a first means (2) for determining the current position of the aircraft;
- a memory (3) for recording at least one airport map;
- a display device (4) which is able to present, on at least one viewing screen (7), at least partially, an airport map with which can be associated a symbol illustrating said current position of the aircraft, said display device (4) being produced in such a way as to be able to display a first type of display mode, in which said symbol illustrating said current position of the aircraft is fixed on the viewing screen (7) and said airport map is mobile;
- an interface means (8) allowing an operator to operate on the display used by said display device (4) ;
- at least one storage means (10) able to store a plurality of airport maps; and
- a selection device (13) making it possible to select an airport map stored in said storage means (10) in order to transmit it to said display device (4) so that it can display it, said selection device (13) comprising at least automatic selection means (14) making it possible to select automatically an airport map to be displayed, according to at least the current position of the aircraft,
**characterized in that**:
- said system (1) furthermore comprises a second means (12) associated with said storage means (10) and making it possible to determine a reference point for each airport whose map is stored in said storage means (10), as well as a coverage volume which is defined around said reference point;
- said automatic selection means (14) comprise a first element (16) which automatically selects an airport map, according to the current position of the aircraft and a coverage volume of an airport;
- said first element (16) of said automatic selection means (14) is produced in such a way as to optimize said coverage volume, as a function of the maximum scale of the display device (4) and of the proximity of the airports, such that said system (1) could automatically carry out the selection of an airport map, at the time when the latter can be viewed according to the maximum scale of the display device (4), whilst avoiding situations in which coverage volumes mutually overlap.

2. The system as claimed in claim 1, **characterized in that** said selection device (13) furthermore comprises manual selection means (18) allowing an operator to select an airport map manually, **in that** a manual selection carried out by said manual selection means (18) retains priority with respect to an automatic selection carried out by said automatic selection means (14), and **in that** said system (1) furthermore comprises means (20) for indication to an operator an inconsistency when the latter selects, using said manual selection means (18), an airport which is different from the destination airport which was selected previously by said automatic selection means (14).

3. The system as claimed in any one of the preceding claims, **characterized in that** said display device (4) is produced in such a way as to be able to display a display mode of a second type, called plan mode, for which the aircraft map is fixed on the viewing screen (7) and the symbol illustrating the current position of the aircraft is mobile, and **in that** said automatic selection means (14) comprise a second element (17) which automatically selects an airport map, as a function of a current distance between the current position of the aircraft and an airport reference point, this current distance being compared with at least one predetermined distance.

4. The system as claimed in claim 3, **characterized in that**, when the aircraft has left an origin airport, said second element (17):
- determines the current distance between the current position of the aircraft and the reference point of said origin airport;
- compares this current distance with a first predetermined distance; and
- automatically selects as an airport map:
• that of the origin airport, as long as said current distance remains less than or equal to said first distance; and
• that of a destination airport, as soon as said current distance becomes greater than said first distance.

5. The system as claimed in one of claims 3 and 4, **characterized in that**, when the aircraft is approaching a destination airport, said second element (17):
- determines the current distance between the current position of the aircraft and the reference point of said destination airport;
- compares this current distance with a second predetermined distance; and
- automatically selects as an airport map:
• that of the airport which is selected initially, as long as said current distance remains greater than or equal to said second distance; and
• that of said destination airport, as soon as said current distance becomes less than said second distance.

6. The system as claimed in any one of the preceding claims, **characterized in that** said airport maps are stored in said storage means (10) according to at least one arranged list, and **in that** said manual selection means (18) comprise at least a first element (22) allowing an operator, in order to make the selection, to choose one of said airport maps in said arranged list.

7. The system as claimed in any one of the preceding claims, **characterized in that** said airport maps which are stored in said storage means (10) are respectively associated with particular descriptive features, and **in that** said manual selection means (18) comprise at least a second element (23) allowing an operator, in order to make the selection, to enter alphanumeric characters making it possible to form one of said descriptive features associated with said airport maps.

8. The system as claimed in any one of the preceding claims, **characterized in that** said manual selection means (18) are produced in such a way as to remain active when said display device (4) displays a display mode of a first type, for which the symbol illustrating said current position of the aircraft is fixed on the viewing screen (7) and the airport map is mobile.

9. The system as claimed in any one of the preceding claims, **characterized in that** it furthermore comprises linking means (26) making it possible to connect said system (1) to a flight management system (25) and **in that** said manual selection means (18) comprise at least a third element (27) for selecting and retrieving data relating to airports from said flight management system (25).

10. The system as claimed in any one of the preceding claims, **characterized in that** it furthermore comprises display control means (28) which control the display, on the viewing screen (7) of the display device (4), directly of a previously selected airport map or of information relating to a previously selected airport map.

11. The system as claimed in claim 10, **characterized in that** said display control means (28) comprise at least one manual means (30).

12. The system as claimed in claim 10, **characterized in that** said display control means (28) comprise at least one means (31) automatically controlling the display when there is a change of display mode of the display device (4).

13. An aircraft, **characterized in that** it comprises an airport viewing system (1) as claimed in any one of claims 1 to 12.

## Patentansprüche

1. Flughafen-Visualisierungssystem an Bord eines Luftfahrzeugs, wobei das System (1) Folgendes umfasst:
- ein erstes Mittel (2) zum Bestimmen der aktuellen Position des Luftfahrzeugs;
- einen Speicher (3) zum Aufzeichnen mindestens einer Flughafenkarte;
- eine Anzeigevorrichtung (4), die in der Lage ist, auf mindestens einem Visualisierungsbildschirm (7) mindestens teilweise eine Flughafenkarte vorzulegen, mit der ein Symbol verknüpft werden kann, das die aktuelle Position des Luftfahrzeugs abbildet, wobei die Anzeigevorrichtung (4) derart gebildet ist, dass sie einen Anzeigemodus einer ersten Art anzeigen kann, für den das Symbol, das die aktuelle Position des Luftfahrzeugs abbildet, auf dem Visualisierungsbildschirm (7) feststeht und die Flughafenkarte beweglich ist;
- ein Schnittstellenmittel (8), das es einer Bedienperson ermöglicht, auf die Anzeige einzuwirken, die von der Anzeigevorrichtung (4) umgesetzt wird;
- mindestens ein Speichermittel (10), das in der Lage ist, eine Vielzahl von Flughafenkarten zu speichern; und
- eine Auswahlvorrichtung (13), die es ermöglicht, eine Flughafenkarte auszuwählen, die in dem Speichermittel (10) gespeichert ist, um sie an die Anzeigevorrichtung (4) zu übertragen, damit sie diese anzeigen kann, wobei die Auswahlvorrichtung (13) mindestens automatische Auswahlmittel (14) umfasst, die es ermöglichen, automatisch eine anzuzeigende Flughafenkarte auszuwählen, mindestens in Abhängigkeit von der aktuellen Position des Luftfahrzeugs, **dadurch gekennzeichnet, dass**:
- das System (1) zudem ein zweites Mittel (12) umfasst, das mit dem Speichermittel (10) verknüpft ist und es ermöglicht, einen Bezugspunkt für jeden Flughafen zu definieren, dessen Karte in dem Speichermittel (10) gespeichert ist, sowie ein Deckungsvolumen, das um den Bezugspunkt herum definiert ist;
- die automatischen Auswahlmittel (14) ein erstes Element (16) umfassen, das in Abhängigkeit von der aktuellen Position des Luftfahrzeugs und des Deckungsvolumens eines Flughafens automatisch eine Flughafenkarte auswählt; und
- das erste Element (16) der automatischen Auswahlmittel (14) gebildet ist, um das Deckungsvolumen in Abhängigkeit von dem maximalen Maßstab der Anzeigevorrichtung (4) und der Nähe der Flughäfen zu optimieren, so dass das System (1) automatisch die Auswahl einer Flughafenkarte zu dem Zeitpunkt, an dem sie gemäß dem maximalen Maßstab der Anzeigevorrichtung (4) visualisiert werden kann, treffen kann und dabei Situationen vermeidet, in denen sich Deckungsvolumen gegenseitig überschneiden.

2. System nach Anspruch 1,
**dadurch gekennzeichnet, dass** die Auswahlvorrichtung (13) zudem manuelle Auswahlmittel (18) umfasst, die es einer Bedienperson ermöglichen, eine Flughafenkarte manuell auszuwählen, dass eine manuelle Auswahl, die von den manuellen Auswahlmitteln (18) getroffen wird, gegenüber einer automatischen Auswahl, die von den automatischen Auswahlmitteln (14) getroffen wird, vorrangig ist, und dass das System (1) zudem Mittel (20) umfasst, um einer Bedienperson eine Inkohärenz anzugeben, wenn diese anhand der manuellen Auswahlmittel (18) einen Flughafen auswählt, der anders als der Zielflughafen ist, der zuvor von den automatischen Auswahlmitteln (14) ausgewählt wurde.

3. System nach einem der vorhergehenden Ansprüche, **dadurch gekennzeichnet, dass** die Anzeigevorrichtung (4) derart gebildet ist, dass sie einen Anzeigemodus einer zweiten Art anzeigen kann, der Planmodus genannt wird, bei dem die Flughafenkarte auf dem Visualisierungsbildschirm (7) feststeht und das Symbol, das die aktuelle Position des Luftfahrzeugs abbildet, beweglich ist, und dass die automatischen Auswahlmittel (14) ein zweites Element (17) umfassen, das in Abhängigkeit von einem aktuellen Abstand zwischen der aktuellen Position des Luftfahrzeugs und einem Flughafenbezugspunkt automatisch eine Flughafenkarte auswählt, wobei der aktuelle Abstand mindestens mit einem vorherbestimmten Abstand verglichen wird.

4. System nach Anspruch 3,
**dadurch gekennzeichnet, dass**, wenn das Luftfahrzeug einen Ausgangsflughafen verlassen hat, das zweite Element (17):
- den aktuellen Abstand zwischen der aktuellen Position des Luftfahrzeugs und dem Bezugspunkt des Ausgangsflughafens bestimmt;
- den aktuellen Abstand mit einem ersten vorherbestimmten Abstand vergleicht; und
- automatisch Folgendes als Flughafenkarte auswählt:
■ die des Ausgangsflughafens, solange der aktuelle Abstand kleiner oder gleich dem ersten Abstand bleibt; und
- die eines Zielflughafens, sobald der aktuelle Abstand größer wird als der erste Abstand.

5. System nach einem der Ansprüche 3 und 4,
**dadurch gekennzeichnet, dass**, wenn das Luftfahrzeug sich einem Zielflughafen nähert, das zweite Element (17):
- den aktuellen Abstand zwischen der aktuellen Position des Luftfahrzeugs und dem Bezugspunkt des Zielflughafens bestimmt;
- diesen aktuellen Abstand mit einem zweiten vorherbestimmten Abstand vergleicht; und
- automatisch Folgendes als Flughafenkarte auswählt:
■ dies des Flughafens, der ursprünglich ausgewählt wurde, solange der aktuelle Abstand größer oder gleich dem zweiten Abstand bleibt; und
■ die des Zielflughafens, sobald der aktuelle Abstand kleiner als der zweite Abstand wird.

6. System nach einem der vorhergehenden Ansprüche, **dadurch gekennzeichnet, dass** die Flughafenkarten in dem Speichermittel (10) gemäß mindestens einer geordneten Liste gespeichert sind, und dass die manuellen Auswahlmittel (18) mindestens ein erstes Element (22) umfassen, das es einer Bedienperson ermöglicht, um die Auswahl zu treffen, eine der Flughafenkarten aus der geordneten Liste zu wählen.

7. System nach einem der vorhergehenden Ansprüche, **dadurch gekennzeichnet, dass** die Flughafenkarten, die in dem Speichermittel (10) gespeichert sind, jeweils mit bestimmten Bezeichnungscharakteristiken verknüpft sind, und dass die manuellen Auswahlmittel (18) mindestens ein zweites Element (23) umfassen, das es einer Bedienperson ermöglicht, um die Auswahl zu treffen, alphanumerische Zeichen einzugeben, die es ermöglichen, eine der Bezeichnungscharakteristiken zu bilden, die mit den Flughafenkarten verknüpft sind.

8. System nach einem der vorhergehenden Ansprüche, **dadurch gekennzeichnet, dass** die manuellen Auswahlmittel (18) derart gebildet sind, dass sie aktiv bleiben, wenn die Anzeigevorrichtung (4) einen Anzeigemodus einer ersten Art anzeigt, bei dem das Symbol, das die aktuelle Position des Luftfahrzeugs abbildet, auf dem Visualisierungsbildschirm (7) feststeht und die Flughafenkarte beweglich ist.

9. System nach einem der vorhergehenden Ansprüche, **dadurch gekennzeichnet, dass** es zudem Verbindungsmittel (26) umfasst, die es ermöglichen, das System (1) mit einem Flugleitsystem (25) zu verbinden, und dass die manuellen Auswahlmittel (18) mindestens ein drittes Element (27) umfassen, um aus dem Flugleitsystem (25) Daten über Flughäfen auszuwählen und wiederzugewinnen.

10. System nach einem der vorhergehenden Ansprüche, **dadurch gekennzeichnet, dass** es zudem Anzeigesteuermittel (28) umfasst, welche direkt die Anzeige auf dem Visualisierungsbildschirm (7) der Anzeigevorrichtung (4) einer zuvor ausgewählten Flughafenkarte oder von Informationen über eine zuvor ausgewählte Flughafenkarte steuern.

11. System nach Anspruch 10,
**dadurch gekennzeichnet, dass** die Anzeigesteuermittel (28) mindestens ein manuelles Mittel (30) umfassen.

12. System nach Anspruch 10,
**dadurch gekennzeichnet, dass** die Anzeigesteuermittel (28) mindestens ein Mittel (31) umfassen, das die Anzeige bei einer Änderung des Anzeigemodus der Anzeigevorrichtung (4) automatisch steuert.

13. Luftfahrzeug,
**dadurch gekennzeichnet, dass** es ein Flughafen-Visualisierungssystem (1) umfasst, wie es in einem der Ansprüche 1 bis 12 vorgegeben wird.
